# EUROPEAN PATENT APPLICATION

(11) **EP 3 385 461 A1**
(43) Date of publication of application: **10.10.2018**
(21) Application number: 17165355.3
(22) Date of filing: 06.04.2017
(51) Int. Cl.: E03C 1/05, G05D 23/13

(54) **DEVICE FOR INPUTTING AND OUTPUTTING INFORMATION, SYSTEM FOR ADJUSTING AT LEAST TWO PHYSICAL PARAMETERS, FLUID OUTPUT ASSEMBLY, METHOD FOR ADJUSTING AT LEAST ONE PHYSICAL PARAMETER AND COMPUTER PROGRAM**

(71) Applicant: WWB Sweden AB, 183 61 Täby (SE)
(72) Inventor: Langendijk, Rob, 13347 Berlin (DE)
(74) Representative: Seliger, Knut

(57) **Abstract**

A device (10) for inputting and outputting information about at least two physical parameters of a fluid to be dispensed, in particular about temperature T and volume flow Q of shower water or tap water is provided. The device (10) is configured to receive input information, in particular entered by manual touch or actuation, about a desired value of said parameters, to optically output output information (20) about the entire setting range (30, 32) and the currently set value (34) within the setting range (30, 32) for both parameters, to convert said input information to electric signals, and to transmit said signals.

## Description

The invention relates to a device for inputting and outputting information about at least two physical parameters of a fluid to be dispensed, in particular of temperature and volume flow of shower water or tap water, a system for adjusting at least two physical parameters of a fluid to be dispensed, in particular temperature and volume flow of shower water or tap water, a fluid output assembly, a method for adjusting at least one physical parameter of a fluid to be dispensed, in particular temperature and/or volume flow of shower water, and a computer program, particularly an app.

The adjustment of volume flow and temperature of shower water and tap water is realized in a multitude of ways and with a great variety of devices. Up to now, mostly mechanical devices are used, such as mixer taps that dispense a predefined mixture of hot and cold water in order to achieve a convenient temperature. Single-lever mixers are suitable for adjusting temperature and volume flow by movement of one lever in different directions: a rotational movement to a left side or a right side, respectively, is typically used to adjust the volume flow while a tilting of the lever typically adjusts the volume flow.

Modern solutions involve digital technology and enable the user to increase or decrease temperature or volume flow in small increments by tipping "+" or "-" buttons on a control panel. A control device transmits the inputted information and suitable valves that are connected to the respective cold and hot water inlets perform the desired adjustment.

DE 10 2012 006 258 A1 describes an operating device of a sanitary object such as a shower including input areas, realized as push buttons, and/or a setting wheel for adjusting parameters of a water flow. The operating device comprises illuminating devices for giving a feedback on a performed operation of said input area and/or said push button. It is connected with an electronically controlled valve for realizing the actual water flow adjustment.

US 2005 0 121 529 A1 discloses a two-component electronically controlled mixing valve comprising a mixing unit for mixing hot and cold fluids and a control unit for receiving user-based adjusting operations and controlling the mixing process. The control unit comprises a touch sensitive surface and a varying temperature graphic which depicts the relative water temperature and the actual water temperature. In addition to the communication field which is subdivided into compartments, larger buttons can be added for rapid adjustment of predefined values such as most commonly used temperatures.

US 9 085 880 B2 describes a system for controlling shower components of a shower comprising an electronic display for displaying multiple graphical user interfaces and a controller for causing the display to display a graphical representation of a temperature profile. The system is suitable for controlling temperature of shower water. It is furthermore configured to receive user-based adjustments of a volume flow to be dispensed.

The problem to be solved is to provide a device for inputting and outputting information, a system for adjusting at least two physical parameters, a fluid output assembly, a method for adjusting at least one physical parameter and a computer program which allow for an easy, convenient and intuitive adjustment of physical parameters of a fluid to be dispensed.

The problem is solved by the device for inputting and outputting information as claimed in claim 1, the system for adjusting at least two physical parameters as claimed in claim 8, the fluid output assembly as claimed in claim 12, the method for adjusting at least one physical parameter as claimed in claim 13 and a computer program as claimed in claim 14. Advantageous embodiments of the device for inputting and outputting information are given in claims 2-7, advantageous embodiments of the system for adjusting at least two physical parameters are given in claims 9-11 and an advantageous embodiment of the computer program is given in claim 15.

A first aspect of the invention is a device for inputting and outputting information about at least two physical parameters of a fluid to be dispensed, in particular about temperature and volume flow of shower water or tap water. The device is configured to receive input information, in particular entered by manual touch or actuation, about a desired value of said parameters, to optically output output information about the entire setting range and the currently set value within the setting range for both parameters and to convert said input information to electric signals.

The device for inputting and outputting information according to the invention is a device suitable for receiving input information and outputting output information. In particular, it is furthermore configured to provide said signals for transmission to a control device.

Optical outputting of said output information may be realized by indicating or illuminating an actual position, e.g. in a scale or area where maximum and minimum values of said setting range are represented by respective maximum and minimum positions. Therefore, the device may comprise at least one element with light sources such as LEDs configured to indicate e.g. the set values and the minimum and maximum values. The scale may be realized as interactive scale, e.g. displayed on an interactive display. In particular, said values about which information can be indicated are nominal values.

Information about the setting range can be given by indicating positions that represent the range of the respective parameter. The value of a parameter may be a temperature value such as 35°C or a volume flow value. Additionally or alternatively, relative values may be used, such as 70% of the maximum volume flow.

In particular, the device for inputting and outputting information is configured to simultaneously receive and output the respective input and output information for both parameters. It may be fixed or fixable to a wall, e.g. a shower cabin. It may be functionally connected to a control device for controlling said physical parameters, e.g. via a cable connection or a wireless connection. Therefore, it is configured to transmit electric signals, in particular to said control device.

The device enables the user to perform a convenient and intuitive adjustment of e.g. a desired temperature and volume flow of shower or tap water with knowledge of the respective setting ranges and the currently set values within the setting range. The user is, thus, enabled to see the current values and the remaining adjustment options.

In one embodiment, the device is configured to receive said input information and to output said output information about temperature and volume flow of shower water or tap water.

Therefore, the device is suitable for use in shower or tap applications, in particular bathroom or sanitary applications, for the adjustment of said characteristics.

In another embodiment, the device for inputting and outputting information is configured to receive said input information in a communication field and, in particular, to output at least parts of said output information in said communication field; said communication field being formed by independent axes of a graphical representation.

The axes may be linear or curved, e.g. in the shape of a circular arc. In particular, said axes are arranged forming an angle. The communication field may be referred to as matrix.

Said communication field represents an area in which information can be input. It may be subdivided into areas or input sectors representing discrete temperature and/or volume flow values. Thus, the areas of each sector may be configured to receive and/or to output one respective information or value. These areas may furthermore be able to function separately; they may e.g. be realized as mechanical buttons.

The sectors and their limits are particularly optically visible. Their sizes may represent different values of the volume flow to be adjusted, so bigger sectors may represent bigger volume flows. Their colours may indicate different temperatures, for example hot temperatures may be indicated by reddish colours and cool temperatures by bluish colours. Furthermore, colour gradients may be used for a visually appealing design. This embodiment poses a simple and intuitive design for the device.

In a further embodiment, the device is configured to receive said input information by means of at least one interactive slide control and, in particular, to output at least parts of said output information by means of said interactive slide control.

An interactive slide control is any slide control which is suitable to output said output information and to receive said input information. Slide controls may be linear or curved.

For example, two separately operated slide controls may be used for temperature and volume flow, respectively. In case of physical slide control it may be connected to a suitable incremental encoder in order to convert a control position to electric signals. Another part of said output information, namely the setting range, may be represented by an axis that may be positioned adjacent to said slide control.

In an alternative embodiment, the device is configured to receive said input information by means of at least one interactive control dial and, in particular, to output at least parts of said output information by means said control dial.

An interactive control dial is any control dial which is suitable to output at least parts of said output information and to receive said input information. It may be the graphical representation of a control dial or, in other words, a virtual control dial. It may be similar to those known from mobile digital audio players. The device may comprise two separately operated control dials for temperature and volume flow, respectively.

In another embodiment, the device comprises a plurality of light sources, in particular suitable to emit light in different colours, for outputting at least parts of said output information.

For example, light emitting diodes, LEDs, may be used. The may be arranged on or around a control dial or slide control or a different suitable input element in order to serve as an output element, indicating the respective current and/or inputted values. Different colours may represent different temperatures. The setting range may be represented by a position of the respective LED.

In one embodiment, the device for inputting and outputting information is configured to receive input information about desired values of both parameters which is entered simultaneously by a single manual touch or actuation.

This enables the user to adjust both values with one single input operation and provides, thus, a very convenient operation option.

A second aspect of the invention is a system for adjusting at least two physical parameters of a fluid to be dispensed, in particular temperature and volume flow of shower water or tap water. It comprises a control device for controlling said parameters of said fluid by using said electric signals and a device for inputting and outputting information according to the invention. Said device is connected or connectable with said control device in order to transmit said electric signals from said device to said control device and, in particular, to transmit signals from said control device to said device.

Said electric signals that transmitted by said device for inputting and outputting information are in particular based on input signals received by said device. In particular, the control device is connected or connectable to suitable means to realize the adjustment, such as valves or pumps for inlet fluid. For example, for the controlling of temperature and/or volume flow of water, the control device may be configured to drive a hot water and/or a cold water valve in order to change volume flows of the hot and/or the cold portion of the water.

In this aspect of the invention, the device is enabled to receive said input information about a desired value and to output said output information about the entire setting range and the currently set value within the setting range for both parameters by the control device. Thus, the device may be realized as a standard interactive display or touchscreen suitable for receiving and displaying information which is configured to be a device according to the invention by a suitable control device. In this embodiment, the control device may be combined with the interactive display or touchscreen in one module.

All of the described communication fields, slide controls, control dials and/or any further input and/or output element of the device for inputting and outputting information according to the invention may be realized as physical apparatus or virtually represented on said interactive display which is connected or connectable with the control device.

By transmitting signals from said control device to said device, values can be feed back to the device, e.g. information derived from valve positions or actual value such as measured temperature or volume flow data.

The system for adjusting at least two physical parameters according to the invention enables the user to simply and conveniently adjust said parameters. Additionally, it does not involve mechanical elements such as levers which are susceptible to malfunctions.

In one embodiment, the device for inputting and outputting information of said system for adjusting at least two physical parameters is a touch-sensitive flat panel display.

In particular, it is configured to display said output information by means of a graphical user interface. This user interface may comprise input and/or output elements of the device for inputting and outputting information.

In particular, the flat panel display is a permanently installed display to be installed within the shower cabin for the use while showering. Flat panel displays pose a simple, economic, versatile and maintenance-free option.

The input-output device may be a touch-sensitive flat panel display of a mobile electronic device, in particular of a smartphone or a tablet computer.

In this embodiment, the system for adjusting at least two physical parameters does not necessarily comprise a separate display but any mobile electronic device may be used. A connection to the control device can be established wirelessly, e.g. via Wi-Fi or bluetooth. A display of an electronic device may also be used in addition to a permanently installed display.

The electronic device may comprise a suitable app for inputting and outputting said information, e.g. by means of a graphical user interface. It may also be configured to reproduce the interface of the permanently installed display.

In another embodiment, said control device has a memory for storing at least one value, in particular an inputted value, of at least one of said parameters and to retrieve said value from said memory in order to realize a corresponding adjustment at a later point of time.

In particular, an internal and/or non-volatile memory is meant. A later point of time may in particular be after several hours. The value may be permanently stored in order to enable the user to retrieve his or her configuration at any time. Said control device is particularly configured to store several values, e.g. pairs of values comprising a temperature value and a volume flow value, for several users.

For example, the system comprises programmable buttons for storing user-specific preferred temperature and volume flow values. These preset values can be retrieved at a later point of time in order to directly adjust the parameters according to the requirements of the respective user.

Typically, a suitable input command can be used for storing and another suitable input command can be used for retrieving said value and initiating the adjustment.

A third aspect of the invention is a fluid output assembly, in particular shower assembly or tap assembly, which comprises the system for adjusting at least two physical parameters of a fluid to be dispensed according to the invention and one or more outlets to dispense said fluid. The system is configured to control a dispensing of the fluid out of one or more outlets with controlled values of said physical parameters based on said input information.

Typically, the system is suitable to establish a flow connection between a cold water source, a hot water source and one or more outlets in order to realize a desired volume flow of a desired temperature out of said outlet or outlets, respectively. This may be realized by controlling suitable valves.

Further, the outlets can be separately controlled. Thus, a change from one or more outlets to another or several outlets is possible.

For example, outlets may comprise hand shower, head shower, body spray and/or side spray. Thus, a variety of comfortable usages is provided.

A fourth aspect of the invention is a method for adjusting at least one physical parameter of a fluid to be dispensed, in particular for adjusting temperature and/or volume flow of shower water. A system for adjusting at least two physical parameters according to the invention or a fluid output assembly according to the invention is provided and the device for inputting and outputting information receives an input information about a desired value of at least one of said parameters, in particular of both parameters. It optically outputs an output information about the entire setting range and the currently set value within the setting range for said at least one parameter, in particular for both parameters.

In particular, the receiving of the input information and the outputting of the output information is realized simultaneously in a certain period of time. Thus, the user can see information about the setting range and the currently set value or values and base his decision on how to adjust the desired parameter on this information.

In particular, the device for inputting and outputting information also converts said input information to electric signals and transmits said signals, e.g. to a connected control device.

A fifth aspect of the invention is a computer program, particularly an app, which can be loaded into the internal, in particular non-volatile, memory of a digital computer, in particular of a smartphone or a tablet computer. It comprises sections of software code that are suitable to configure said digital computer to receive data about input information of a desired value of at least one physical parameter of a fluid to be dispensed, to send data about output information of a currently set value of said parameter to a display which is connected or connectable to said digital computer, and to send data about said input information to a control device of a system for adjusting at least two physical parameters of a fluid to be dispensed as claimed in at least one of the claims 8-11 and/or of a fluid output assembly as claimed in claim 12 in order to initiate a controlling of at least one parameter.

In particular, the computer is configured to initiate an adjustment of at least one physical parameter of a fluid to be dispensed. It is typically configured to process said data about input information before sending data to said control device.

Said app may work on a mobile electronic device and/or in addition to a permanently installed display in the shower cabin, near a tap or on a tap, e.g. reproducing the shown values of said display. Alternatively, said app may work independently from said display. Thus, it may be installed and/or used instead of said permanently installed display.

In particular, said app is connected to said device for inputting and outputting information, e.g. via the computer comprised in the electronic device, which is connectable to said control device, e.g. by means of a wireless network, as described, or is connected to said control device in one compact module.

In one embodiment, said computer program comprises sections of software code that are suitable to initiate a displaying of a graphical user interface on said display. Said user interface comprises a graphical representation which is suitable for receiving said input information and outputting at least parts of said output information.

In particular, said app comprises a graphical representation which may reproduce the control and/or display elements of the device in case a permanently installed device is arranged.

The invention is further illustrated and characterized by the following figure that shows one example from which further embodiments and advantages can be drawn. This figure is meant to illustrate the invention but not to limit its scope.

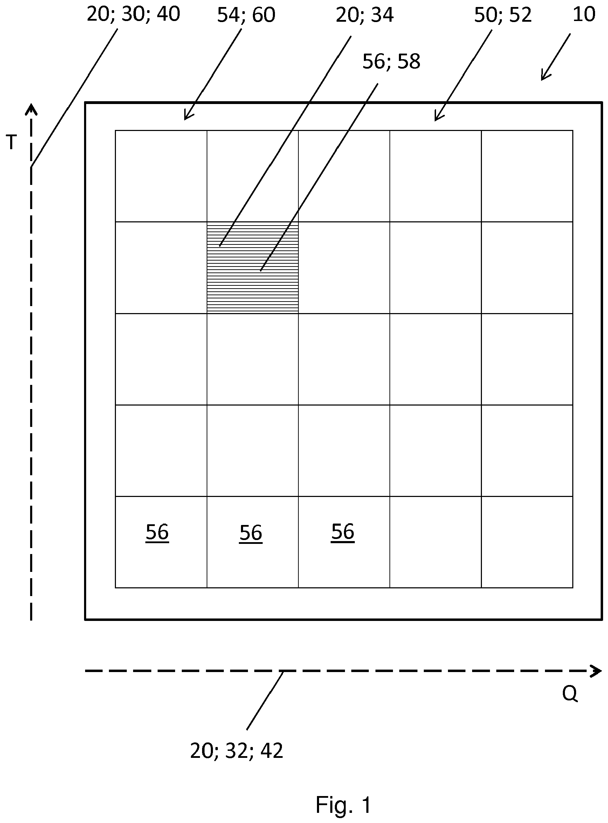

Figure 1 shows a schematic view of a device for inputting and outputting information according to the invention.

The device 10 for inputting and outputting information is realized as graphical representation 50, namely as a communication field 52 or matrix with two independent axes 40, 42 for temperature T and volume flow Q of shower water. The communication field 52 is shown on an interactive flat panel display 60 which is to be installed in a shower cabin. It is subdivided into five by five input sectors 56 which represent pairs of discrete temperature T and volume flow Q values.

The device 10 is configured to receive input information entered by manual touch and to optically output output information 20. Thus, by selecting one input sector 56 and inputting input information by touching it, the user can initiate a simultaneous adjustment of temperature T and volume flow Q of shower water to be dispensed by the connected control device.

By their position on the communication field 52, the input sectors 56 show one part of the output information 20, namely information on the setting ranges 30, 32 of temperature T and volume flow Q. Said setting ranges 30, 32 are represented by the respective minimum and maximum sectors. A further output information 20, namely information on the currently set value 34 within these ranges, is displayed by targeted illumination or highlighting of the respective input sector 56, as shown as a hatched area in one highlighted input sector 58. In the shown embodiment, this is realized by light sources 54 comprised in the flat panel display 60.

### List of reference signs

- Device: 10
- Output information: 20
- Temperature setting range: 30
- Volume flow setting range: 32
- Currently set value: 34
- Temperature axis: 40
- Volume flow axis: 42
- Graphical representation: 50
- Communication field: 52
- Light sources: 54
- Input sector: 56
- Highlighted input sector: 58
- Flat panel display: 60
- Temperature: T
- Volume Flow: Q

## Claims

1. Device (10) for inputting and outputting information about at least two physical parameters of a fluid to be dispensed, in particular about temperature T and volume flow Q of shower water or tap water, wherein the device (10) is configured
- to receive input information, in particular entered by manual touch or actuation, about a desired value of said parameters,
- to optically output output information (20) about the entire setting range (30, 32) and the currently set value (34) within the setting range (30, 32) for both parameters, and
- to convert said input information to electric signals.

2. Device (10) for inputting and outputting information according to claim 1, **characterized in that** the device (10) is configured to receive said input information and to output said output information (20) about temperature T and volume flow Q of shower water or tap water.

3. Device (10) for inputting and outputting information according to one of the claims 1 and 2, **characterized in that** the device (10) is configured to receive said input information in a communication field (52) and, in particular, to output at least parts of said output information (20) in said communication field (52); said communication field (52) being formed by independent axes (40, 42) of a graphical representation (50).

4. Device (10) for inputting and outputting information according to at least one of the claims 1-3, **characterized in that** the device (10) is configured to receive said input information by means of at least one interactive slide control and, in particular, to output at least parts of said output information (20) by means of said interactive slide control.

5. Device (10) for inputting and outputting information according to at least one of the claims 1-4, **characterized in that** the device (10) is configured to receive said input information by means of at least one interactive control dial and, in particular, to output at least parts of said output information (20) by means of said control dial.

6. Device (10) for inputting and outputting information according to at least one of the claims 1-5, **characterized in that** the device (10) comprises a plurality of light sources (54), in particular suitable to emit light in different colours, for outputting at least parts of said output information (20).

7. Device (10) for inputting and outputting information according to at least one of the claims 1-6, **characterized in that** the device (10) is configured to receive input information about desired values of both parameters which is entered simultaneously by a single manual touch or actuation.

8. System for adjusting at least two physical parameters of a fluid to be dispensed, in particular temperature T and volume flow Q of shower water or tap water, comprising a control device for controlling said parameters of said fluid by using said electric signals and a device (10) for inputting and outputting information as claimed in at least one of the claims 1-7 which is connected or connectable with said control device in order to transmit said electric signals from said device (10) to said control device and, in particular, to transmit signals from said control device to said device (10).

9. System for adjusting at least two physical parameters according to claim 8, **characterized in that** the device (10) for inputting and outputting information is a touch-sensitive flat panel display (60).

10. System for adjusting at least two physical parameters according to claim 9, **characterized in that** the device (10) for inputting and outputting information is a touch-sensitive flat panel display (60) of a mobile electronic device, in particular of a smartphone or a tablet computer.

11. System for adjusting at least two physical parameters according to at least one of the claims 8-10, **characterized in that** said control device has a memory for storing at least one value, in particular an inputted value, of at least one of said parameters and to retrieve said value from said memory in order to realize a corresponding adjustment at a later point of time.

12. Fluid output assembly, in particular shower assembly or tap assembly, **characterized in that** it comprises the system for adjusting at least two physical parameters of a fluid to be dispensed as claimed in at least one of the claims 8-11 and one or more outlets to dispense said fluid, wherein the system is configured to control a dispensing of the fluid out of one or more outlets with controlled values of said physical parameters based on said input information.

13. Method for adjusting at least one physical parameter of a fluid to be dispensed, in particular temperature T and/or volume flow Q of shower water, wherein a system for adjusting at least two physical parameters of a fluid to be dispensed as claimed in at least one of the claims 8-11 or a fluid output assembly as claimed in claim 12 is provided and the device (10) for inputting and outputting information receives an input information about a desired value of at least one of said parameters, in particular of both parameters, and optically outputs an output information (20) about the entire setting range (30, 32) and the currently set value (34) within the setting range (30, 32) for said at least one parameter, in particular for both parameters.

14. Computer program, particularly an app, which can be loaded into the internal, in particular non-volatile, memory of an digital computer, in particular of a smartphone or a tablet computer, and which comprises computer program code that, if executed on the digital computer, performs the steps of:
- receiving data about input information of a desired value of at least one physical parameter of a fluid to be dispensed,
- sending data about output information (20) of a currently set value of said parameter to a display which is connected or connectable to said digital computer, and
- sending data about said input information to a control device of a system for adjusting at least two physical parameters of a fluid to be dispensed according to one of the claims 8-11 and/or of a shower assembly according to claim 12 in order to initiate a controlling of at least one parameter.

15. Computer program according to claim 14, **characterized in that** it initiates a displaying of a graphical user interface on said display, wherein said user interface comprises a graphical representation (50) which is suitable for receiving said input information and outputting at least parts of said output information (20).
